# EUROPÄISCHE PATENTANMELDUNG

(11) **EP 2 008 854 A1**
(43) Veröffentlichungstag der Anmeldung: **31.12.2008**
(21) Anmeldenummer: 08010084.5
(22) Anmeldetag: 03.06.2008
(51) Int. Cl.: B60K 6/44, B60K 6/547

(54) **Hybridfahrzeug, insbesondere Hybridfahrzeug mit Frontantrieb**

(30) Priorität: 27.06.2007 DE 102007029610
(71) Anmelder: Bayerische Motoren Werke Aktiengesellschaft, 80809 München (DE)
(72) Erfinder: Michael, Jörg, 85055 Ingolstadt (DE); Biberger, Wolfgang, 84079 Bruckberg (DE)

(57) **Zusammenfassung**

Hybridfahrzeug mit einem Verbrennungsmotor (2), einem Hauptgetriebe (6) mit mehreren Übersetzungsstufen, wobei der Verbrennungsmotor (2) über eine erste Kupplung (4) mit einer Getriebeeingangswelle (5) des Hauptgetriebes (6) koppelbar ist, einem Achs- oder Verteilergetriebe (9), das einen Getriebeeingang (8) aufweist, der mit einem Getriebeausgang (7) des Hauptgetriebes (6) koppelbar oder permanent gekoppelt ist, und einer elektrischen Maschine (18). Die elektrische Maschine (18) ist kinematisch mit der Getriebeeingangswelle (5) des Hauptgetriebes (6) koppelbar oder permanent gekoppelt. Ferner ist sie mit dem Getriebeausgang (7) des Hauptgetriebes (6) bzw. mit dem Getriebeeingang (8) des Achs- oder Verteilergetriebes (9) koppelbar ist bzw. permanent gekoppelt.

## Beschreibung

Die vorliegende Erfindung betrifft ein Hybridfahrzeug gemäß dem Oberbegriff des Patentanspruches 1.

Unter einem Hybridfahrzeug wird ein Fahrzeug mit einem Verbrennungsmotor und mindestens einer elektrischen Maschine verstanden, die sowohl zur Rekuperation von Bremsenergie als auch zum Antrieb des Fahrzeugs genutzt werden kann. Unterschieden werden können so genannte "Mild-Hybrids" bei denen die elektrische Maschine primär zur Bremsenergierekuperation und zur Unterstützung des Verbrennungsmotors vorgesehen ist, und so genannte "Full-Hybrids", die wahlweise ein rein verbrennungsmotorisch angetriebenes Fahren, rein elektrisch angetriebenes Fahren sowie einen Kombibetrieb ermöglichen, bei denen gleichzeitig der Verbrennungsmotor und die elektrische Maschine das Fahrzeug antreiben.

Hinsichtlich der Anordnung der elektrischen Maschine im Antriebsstrang des Fahrzeugs gibt es eine Vielzahl von Möglichkeiten. Bekannt sind Konzepte, bei denen die elektrische Maschine am Eingang des Getriebes, d. h. im Bereich zwischen dem Verbrennungsmotor und dem Getriebe angeordnet ist. Es gibt auch Konzepte, bei denen die elektrische Maschine am Getriebeausgang angeordnet ist, d. h. im Bereich zwischen dem Getriebe und dem Achsgetriebe bzw. Differential. Ferner sind Hybridkonzepte mit Doppelkupplungsgetrieben bekannt, bei denen die elektrische Maschine mit einer Teilwelle des Doppelkupplungsgetriebes koppelbar ist.

Bei der Bewertung der oben genannten Konzepte kommt es wesentlich darauf an, ob ein primär verbrauchsgünstiger Fahrzeugantrieb oder ein möglichst leistungsstarker Fahrzeugantrieb angestrebt wird. Bei dem Konzept, bei dem die elektrische Maschine zwischen dem Verbrennungsmotor und dem Getriebe angeordnet ist, muss, sofern die Effizienz des Fahrzeugantriebs im Fokus steht, der Wirkungsgrad des Getriebes mit berücksichtigt werden. Da das Getriebe üblicherweise auf einen Verbrennungsmotor ausgelegt ist, der wesentlich leistungsstärker als die elektrische Maschine eines Hybridfahrzeugs ist, sind die Schleppverlust prozentual in Bezug auf die Leistung der elektrischen Maschine gesehen überproportional hoch. Bei einer Anordnung der elektrischen Maschine am Getriebeausgang hingegen muss die elektrische Maschine für eine leistungsorientierte Fahrweise und den Anfahrvorgang im rein elektrischen Betrieb die Getriebespreizung mit abdecken, d. h. sie muss entsprechend groß dimensioniert werden. Damit steigen die Kosten, die Massenträgheit und das Gewicht der elektrischen Maschine.

Aufgabe der Erfindung ist es, ein Hybridfahrzeugkonzept zu schaffen, das sowohl für Betriebszustände, in denen ein möglichst leistungsstarker Antrieb gewünscht wird, als auch in Betriebssituationen, in denen ein möglichst verbrauchsarmer Antrieb gewünscht wird, möglichst optimal ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Hybridfahrzeug, mit einem Verbrennungsmotor und einem Getriebe, das im Folgenden auch als "Hauptgetriebe" bezeichnet wird. Das Hauptgetriebe weist mehrere schaltbare Übersetzungsstufen auf. Es kann sich hierbei z. B. um ein Automatikgetriebe, ein Handschaltgetriebe, ein automatisiertes Handschaltgetriebe, ein Doppelkupplungsgetriebe, aber auch um ein stufenloses Getriebe handeln. Der Verbrennungsmotor ist über eine erste Kupplung mit einer Eingangswelle des Hauptgetriebes koppelbar. Ein Getriebeausgang des Hauptgetriebes ist mit einem Getriebeeingang eines Achsgetriebes koppelbar bzw. permanent gekoppelt. Für den Fall, dass es sich bei dem Hybridfahrzeug um ein Allradfahrzeug handelt, kann der Getriebeausgang des Hauptgetriebes auch mit einem Verteilergetriebe gekoppelt sein. Schließlich ist eine elektrische Maschine vorgesehen, die je nach Betriebszustand als Generator oder als Motor arbeitet.

Die Grundidee der Erfindung besteht in einer "Kombination" der beiden eingangs beschriebenen Anordnungskonfigurationen, bei denen die elektrische Maschine getriebeeingangsseitig bzw. getriebeausgangsseitig angeordnet ist. Anders ausgedrückt, besteht der Kern der Erfindung darin, dass in manchen Betriebszuständen die elektrische Maschine über eine zweite Kupplung kinematisch mit der Getriebeeingangswelle des Hauptgetriebes und in anderen Betriebszuständen mit dem Getriebeausgang des Hauptgetriebes bzw. mit dem Getriebeeingang des Achs- oder Verteilergetriebes gekoppelt ist.

Wie später noch ausführlich erläutert wird, kann die elektrische Maschine je nach Fahrerwunsche bzw. je nach momentanem Betriebszustand des Hybridfahrzeugs leistungsorientiert oder verbrauchsorientiert in den Antriebsstrang des Hybridfahrzeug eingekoppelt werden.

Ausdrücklich sei darauf hingewiesen, dass das oben beschriebene Grundprinzip sowohl bei Fahrzeugen mit einem Standardheckantrieb als auch bei Fahrzeugen mit Frontantrieb oder Allradantrieb einsetzbar ist.

Bei einem Fahrzeug mit Heckantrieb und Frontmotor, d. h. bei einem Fahrzeug, bei dem der Verbrennungsmotor in herkömmlicher Weise vorne im Fahrzeug angeordnet ist, kann die elektrische Maschine parallel zum Hauptgetriebe angeordnet sein. Ein Rotor der elektrischen Maschine kann in diesem Fall über die zweite Kupplung und eine Übersetzungsstufe mit der Getriebeeingangswelle des Hauptgetriebes und über eine dritte Kupplung und eine weitere Übersetzungsstufe mit dem Getriebeausgang des Hauptgetriebes bzw. mit dem Getriebeeingang des Achs- oder Verteilergetriebes gekoppelt sein. Bei den Übersetzungsstufen kann es sich um z.B. Zahnradstufen, Ketten- oder Riementriebe handeln. Bei einem derartigen Fahrzeug mit Standardheckantrieb ist der Getriebeausgang des Hauptgetriebes koaxial zum Getriebeeingang des Achs- oder Verteilergetriebes angeordnet.

Der Verbrennungsmotor ist, wie bei herkömmlichen Fahrzeugen mit Heckantrieb bzw. mit Allradantrieb längs eingebaut, d. h. eine Kurbelwelle des Verbrennungsmotors verläuft parallel zur Hauptfahrrichtung des Fahrzeugs, d. h. in Fahrzeuglängsrichtung.

Wenngleich die Erfindung auch bei Fahrzeugen mit Heck- bzw. Allradantrieb eingesetzt werden kann, ist sie insbesondere für Fahrzeuge mit Front-Querantrieb geeignet, d. h. für Fahrzeuge, bei denen der Verbrennungsmotor im Bereich der Vorderachse eingebaut ist und zwar so, dass sich die Kurbelwelle des Verbrennungsmotors quer zur Fahrzeuglängsrichtung erstreckt.

Nach einer Weiterbildung der Erfindung weist das Hauptgetriebe des Hybridfahrzeugs mit Front-Querantrieb mehrere Übersetzungsstufen mit jeweils zwei miteinander "gekoppelten Rädern", d.h. beispielsweise Zahnrad-, Ketten- oder Riementriebstufen, auf, deren eines Rad jeweils auf der Getriebeeingangswelle des Hauptgetriebes und deren anderes Rad jeweils auf einer ersten Nebenwelle des Hauptgetriebes angeordnet ist. Die erste Nebenwelle kann über eine Übersetzungsstufe mit dem Getriebeeingang des Achs- oder Verteilergetriebes gekoppelt sein.

Im Fall eines Hybridfahrzeugs mit Front-Querantrieb ist ferner eine zweite Nebenwelle vorgesehen, die über eine Übersetzungsstufe mit der Getriebeeingangswelle des Hauptgetriebes gekoppelt ist und über eine weitere Übersetzungsstufe mit der Getriebeeingangswelle des Achs- oder Verteilergetriebes. Die beiden Nebenwellen sind jeweils versetzt zur Drehachse des Getriebeeingangs des Achs- oder Verteilergetriebes angeordnet. Im Falle eines Hybridfahrzeugs mit Front-Querantrieb ist die elektrische Maschine auf der zweiten Nebenwelle angeordnet, wobei zwischen der elektrischen Maschine und der Getriebeeingangswelle des Hauptgetriebes die zweite Kupplung und zwischen der elektrischen Maschine und der Getriebeeingangswelle des Achs- oder Verteilergetriebes die dritte Kupplung angeordnet sein kann.

Ferner kann eine vierte Kupplung zwischen der ersten Nebenwelle und dem Getriebeeingang des Achs- oder Verteilergetriebes angeordnet sein.

Im Folgenden wird die Erfindung im Zusammenhang mit der Zeichnung näher erläutert. Es zeigen:
- Figur 1: das Grundprinzip der Erfindung bei einem Fahrzeug mit Standardheckantrieb;
- Figur 2: das Grundprinzip der Erfindung bei einem Fahrzeug mit FrontQuerantrieb;
- Figuren 3-11: verschiedene Betriebszustände des Ausführungsbeispiels der Figur 2;
- Figur 12,13: vereinfachte Varianten des Ausführungsbeispiels der Figur 2.

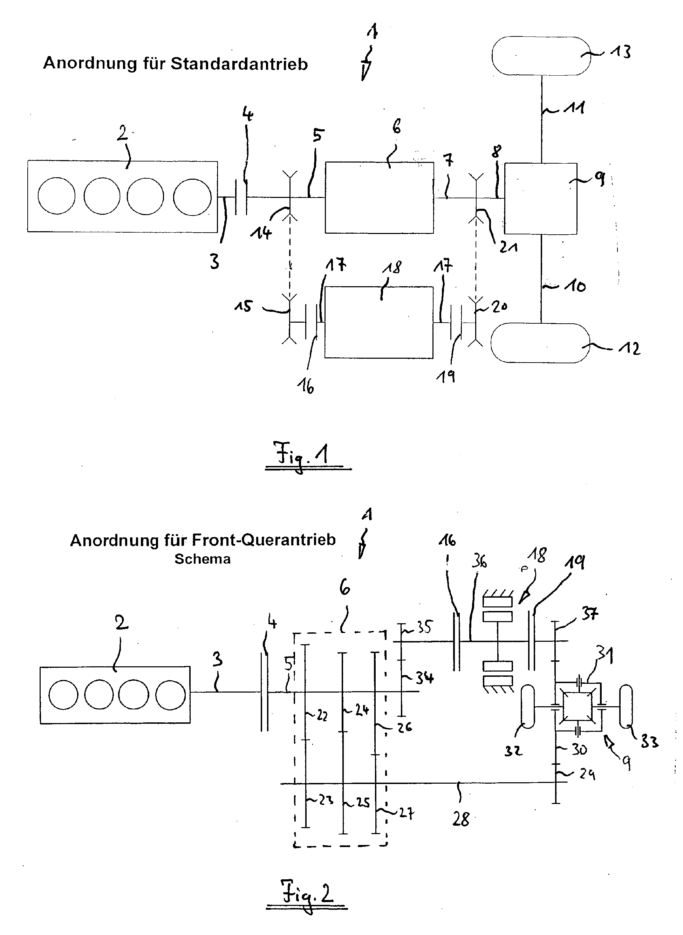

Figur 1 zeigt ein Hybridfahrzeug 1 mit einem Standardheckantrieb. Das Hybridfahrzeug 1 weist einen Verbrennungsmotor 2 auf, der längs eingebaut ist, d. h. so, dass sich eine Kurbelwelle 3 des Verbrennungsmotors 2 in Fahrzeuglängsrichtung erstreckt. Über eine erste Kupplung 4 ist die Kurbelwelle 3 des Verbrennungsmotors 2 mit einer Getriebeeingangswelle 5 eines Getriebes 6 koppelbar, das im Folgenden auch als "Hauptgetriebe" bezeichnet wird. Das Hauptgetriebe weist mehrere Übersetzungsstufen auf. Es kann sich um ein Automatikgetriebe, ein Handschaltgetriebe ein automatisiert schaltbares Handschaltgetriebe, ein Doppelkupplungsgetriebe, ein stufenloses Getriebe o. ä. handeln. Insbesondere kann es sich um ein Getriebe handeln, bei dem eine ohnehin vorhandene "dritte Welle", die bei herkömmlichen Getrieben zur Darstellung eines Rückwärtsgangs dient, vorhanden ist. Eine Getriebeausgangswelle 7 des Hauptgetriebes ist mit einer Getriebeeingangswelle 8 eines Achsgetriebes bzw. Differentials 9 verbunden, welches das über die Getriebeeingangswelle 8 eingeleitete Drehmoment auf zwei Abtriebswellen 10, 11 bzw. auf die Hinterräder 12, 13 des Hybridfahrzeugs 1 verteilt.

Wie aus Figur 1 ersichtlich ist, ist die Getriebeeingangswelle 5 des Hauptgetriebes 6 über eine durch zwei kinematisch miteinander gekoppelte Räder gebildete Übersetzungsstufe und eine zweite Kupplung 16 mit einer Rotorwelle 17 einer elektrischen Maschine 18 koppelbar. Bei der Übersetzungsstufe kann es sich um eine Zahnradstufe, einen Kettentrieb, einen Riementrieb o. ä. handeln.

Die Rotorwelle 17 der elektrischen Maschine ist ferner über eine dritte Kupplung 19 und eine durch zwei Räder 20, 21 gebildete Übersetzungsstufe mit der Getriebeausgangswelle 7 des Hauptgetriebes 6 bzw. mit der Getriebeeingangswelle 8 des Differentials 9 koppelbar. Diese Übersetzungsstufe kann ebenfalls durch eine Zahnradstufe, einen Kettentrieb, einen Riementrieb o. ä. gebildet sein.

Der wesentliche Vorteil des in Figur 1 gezeigten Hybridkonzepts im Vergleich zu herkömmlichen Hybridkonzepten besteht darin, dass durch die "parallele Anordnung" der elektrischen Maschine 8 in Bezug auf das Hauptgetriebe 6 das Hauptgetriebe 6 in bestimmten Fahrzuständen "überbrückt" werden kann. So ist es beispielsweise möglich, verbrauchsorientiert rein elektrisch zu fahren, wobei die elektrische Maschine 18 als Elektromotor arbeitet und Drehmoment über die dritte Kupplung 19, die Übersetzungsstufe 20, 21 in das Differential 9 einspeist. Alternativ dazu ist es auch möglich, leistungsorientiert rein elektrisch zu fahren, wobei die erste Kupplung 4 geöffnet ist und das von der elektrischen Maschine 18 erzeugte Drehmoment über die zweite Kupplung 16, die Übersetzungsstufe 14, 15, das Hauptgetriebe 6 in das Differential 9 eingeleitet wird.

Selbstverständlich ist es auch möglich, rein verbrennungsmotorisch zu fahren, wobei die elektrische Maschine 18 über die Kupplungen 16, 19 abgekoppelt werden kann, oder im Kombibetrieb, wobei der Verbrennungsmotor 2 und gleichzeitig die elektrische Maschine 18 das Fahrzeug antreiben.

Figur 2 zeigt ein Ausführungsbeispiel eines Hybridfahrzeugs 1 mit Front-Querantrieb. Bei einem Fahrzeug mit Front-Querantrieb ist der Verbrennungsmotor 2 so in das Fahrzeug eingebaut, dass sich die Kurbelwelle 3 des Verbrennungsmotors 2 quer zur Hauptfahrrichtung, d. h. quer zur Längsrichtung des Fahrzeugs erstreckt. Die Kurbelwelle 3 des Verbrennungsmotors 2 ist über die erste Kupplung 4 mit der Getriebeeingangswelle 5 des Hauptgetriebes 6 koppelbar, das mehrere schaltbare Zahnradstufen mit jeweils zwei miteinander kämmenden Zahnrändern 22, 23 bzw. 24, 25 bzw. 26, 27 aufweist. Die Zahnräder 22, 24, 26, sind auf der Getriebeeingangswelle 5 angeordnet. Die Zahnräder 23, 25, 27 sind auf einer ersten Nebenwelle 28 angeordnet. Die erste Nebenwelle 28 ist über eine Zahnradstufe 29, 30 mit dem "Korb" 31 eines Differentials 9 verbunden, welches die beiden Vorderräder 32, 33 des Hybridfahrzeugs 1 antreibt.

Die Getriebeeingangswelle 5 ist über eine Zahnradstufe 34, 35 und die zweite Kupplung 16 mit einer zweiten Nebenwelle 36 koppelbar, auf der die elektrische Maschine 18 angeordnet ist. Die zweite Nebenwelle 36 ist bei herkömmlichen Front-/Quergetrieben ohnehin vorgesehen und dient dort als sogenannte "Rückwärtsgangwelle". Über die dritte Kupplung 19 und ein Zahnrad 37, das mit dem Zahnrad 30 des Differentials 9 kämmt, ist die elektrische Maschine 18 bzw. die zweite Nebenwelle 36 mit dem Differential 9 koppelbar.

Die beiden Nebenwellen 28, 36 sind bei herkömmlichen Front-Querantrieben ohnehin vorhanden. Die erste Nebenwelle 28 kann auch als "Vorgelegewelle" bezeichnet werden. Die zweite Nebenwelle 36 stellt bei herkömmlichen Front-Querantrieben die so genannte "Rückwärtsgangwelle" dar.

Im Folgenden werden verschiedene Betriebszuständen des in Figur 2 gezeigten Ausführungsbeispiels beschrieben.

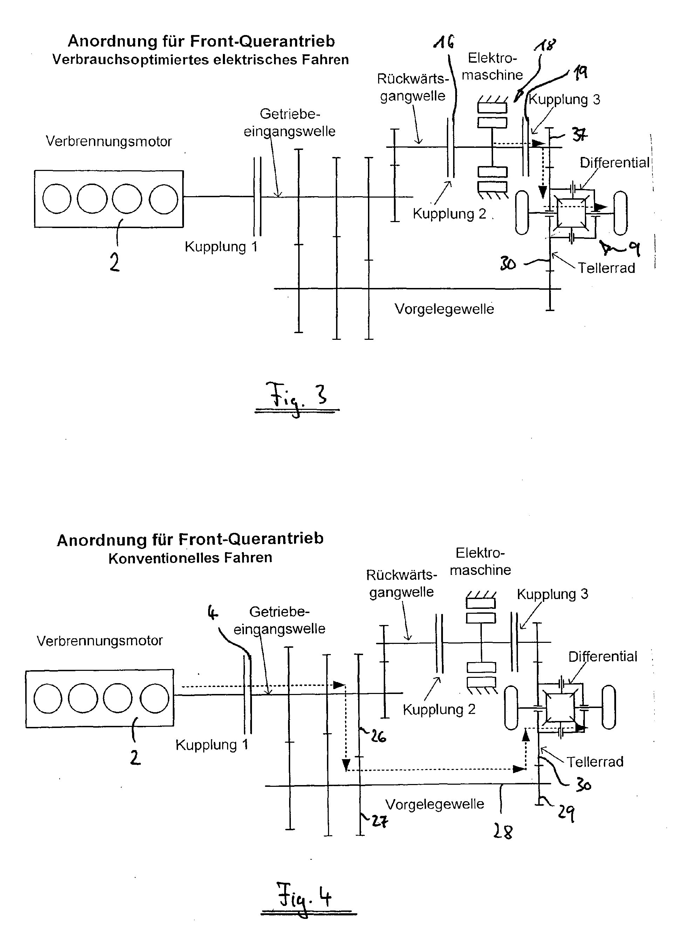

Figur 3 zeigt den Kraftfluss bei rein elektrischem, verbrauchsoptimierten Fahren. In diesem Zustand ist der Verbrennungsmotor 2 ausgeschaltet und die zweite Kupplung 16 ist geöffnet. Der Verbrennungsmotor 2 ist somit von der elektrischen Maschine 18 entkoppelt. Das von der elektrischen Maschine 18, die in diesem Betriebszustand als Elektromotor arbeitet, gelieferte Drehmoment wird über die dritte Kupplung 19 und die Zahnradstufe 37, 30 in das Differential eingeleitet. Die Übersetzungsstufen des Hauptgetriebes werden in diesem Betriebszustand nicht genutzt.

Figur 4 zeigt den Kraftfluss bei konventionellem Fahren. Das vom Verbrennungsmotor 1 gelieferte Drehmoment gelangt über die erste Kupplung 4 und eine der Übersetzungsstufen des Hauptgetriebes, hier der Übersetzungsstufe, die durch die Zahnräder 26, 27 gebildet ist, auf die erste Nebenwelle 28 und von dort über die Zahnradstufe 29, 30 zum Differential. Dieser Betriebszustand kann auch bei einem Ausfall der elektrischen Maschine 18 eingestellt werden. Die elektrische Maschine 18 kann durch Zuschalten der ersten Kupplung 4 mit in den Kraftfluss eingebunden werden, was später noch näher erläutert wird.

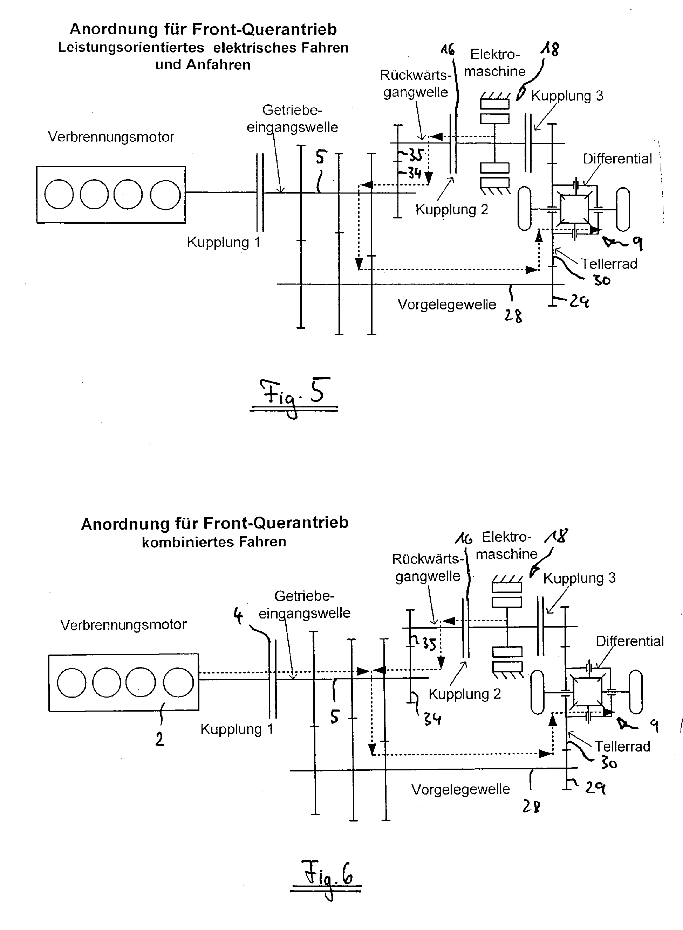

Figur 5 zeigt den Kraftfluss im Betriebszustand "leistungsorientiertes elektrisches Fahren und Anfahren". Das von der elektrischen Maschine 18 gelieferte Drehmoment gelangt über die zweite Kupplung 16 und die Zahnradstufe 34, 35 auf die Getriebeeingangswelle 5 und von der Getriebeeingangswelle 5 über eine der Übersetzungsstufen des Hauptgetriebes auf die Vorgelegewelle 28 und von dort über die Zahnradstufe 29, 30 zum Differential 9.

Figur 6 zeigt den Kraftfluss im Betriebszustand "kombiniertes Fahren". Das vom Verbrennungsmotor 2 gelieferte Drehmoment gelangt über die erste Kupplung 4 und eine der Übersetzungsstufen des Hauptgetriebes zur Vorgelegewelle 28 und von dort über die Zahnradstufe 29, 30 zum Differential 9. Dem vom Verbrennungsmotor 2 gelieferten Drehmoment wird in diesem Betriebszustand ein von der elektrischen Maschine 8 geliefertes Drehmoment überlagert, das über die zweite Kupplung 16 und die Zahnradstufe 34, 35 in die Getriebeeingangswelle 5 eingespeist wird. Parallel zu dem vom Verbrennungsmotor erzeugten Drehmoment kann also zusätzliches elektrisches erzeugtes Drehmoment in den Antriebsstrang eingespeist werden, was z. B. bei Überholvorgängen von Vorteil ist.

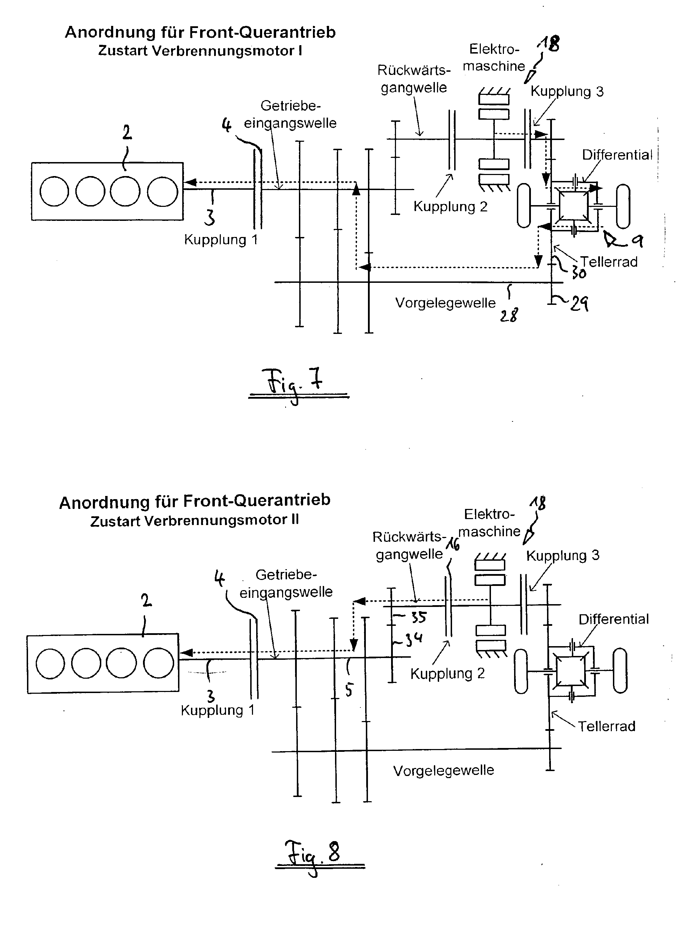

Figur 7 zeigt den Kraftfluss, wenn aus dem rein elektrischen Fahrbetrieb heraus der Verbrennungsmotor 2 zugestartet wird. Der Kraftfluss bei rein elektrischem verbrauchsoptimierten Fahrbetrieb wurde bereits im Zusammenhang mit Figur 3 erläutert. Ein Teil des von der elektrischen Maschine 18 erzeugten und in das Differential eingespeisten Drehmoments wird über die Zahnradstufe 29, 30 abgezweigt und über die zweite Nebenwelle 28 und eine der Übersetzungsstufen des Hauptgetriebes in die Kurbelwelle 3 des Verbrennungsmotors 2 eingeleitet, wobei die erste Kupplung 4 zum Starten des Verbrennungsmotors 2 geschlossen wird.

Figur 8 beschreibt eine weitere Möglichkeit, den Verbrennungsmotor 2 zu starten bzw. aus dem rein elektrischen Fahrbetrieb heraus zuzustarten. Das für den Start des Verbrennungsmotors 2 benötigte Drehmoment fließt hier von der elektrischen Maschine 18 über die geschlossene zweite Kupplung 16, die Zahnradstufe 34, 35, die Getriebeeingangswelle 5 und die geschlossene erste Kupplung 4 zur Kurbelwelle 3 des Verbrennungsmotors 2. Diese Variante des Zustartens bietet sich insbesondere dann an, wenn das Hybridfahrzeug 1 steht und die gesamte Leistung der elektrischen Maschinen 18 für den Start des Verbrennungsmotors 2 zur Verfügung steht.

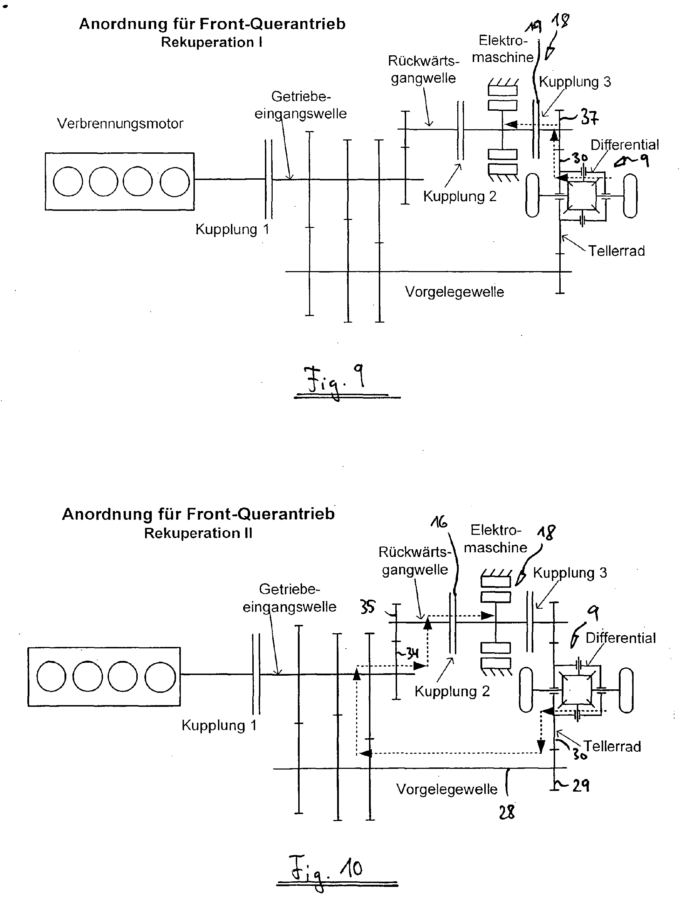

Figur 9 zeigt den Kraftfluss, wenn sich das Hybridfahrzeug 1 im Schubbetrieb befindet und Drehmoment "auf kürzestem Weg" in die elektrische Maschine 18 eingespeist und dort generatorisch in elektrische Energie umgewandelt wird (Rekuperation). Das vom schiebenden Fahrzeug gelieferte Drehmoment gelangt vom Differential 9 über die Zahnradstufe 30, 37 und die dritte Kupplung 19 zur elektrischen Maschine 18.

Figur 10 zeigt einen weiteren Rekuperationsmodus, bei dem im Unterschied zu dem in Figur 9 gezeigten Rekuperationsmodus das Hauptgetriebe eingebunden wird. Das vom Differential 9 kommende Drehmoment gelangt über die Zahnradstufe 30, 29, die erste Nebenwelle 28 und eine der Übersetzungsstufen des Hauptgetriebes sowie die Zahnradstufe 34, 35 und die zweite Kupplung 16 zur elektrischen Maschine 18.

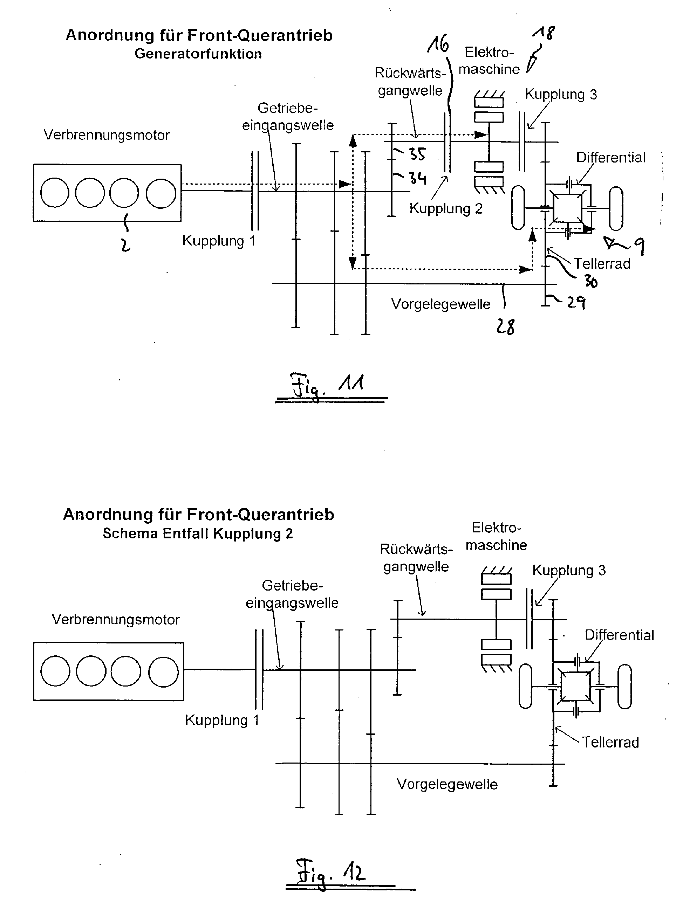

Figur 11 zeigt einen Betriebszustand, bei dem das Fahrzeug verbrennungsmotorisch angetrieben und gleichzeitig ein elektrischer Energiespeicher (nicht dargestellt), z.B. eine Fahrzeugbatterie, geladen wird. Drehmoment vom Verbrennungsmotor 2 gelangt über die Kupplung 1, eine der Übersetzungsstufen des Hauptgetriebes, die zweite Nebenwelle 28 und die Zahnradstufe 29, 30 zum Differential 9. Ein Teil des vom Verbrennungsmotor 2 erzeugten Drehmoments wird abgezweigt und über die Zahnradstufe 34, 35 und die Kupplung 16 in die elektrische Maschine 18 eingeleitet, welche generatorisch arbeitet und Strom zum Laden des hier nicht näher dargestellten Energiespeichers erzeugt.

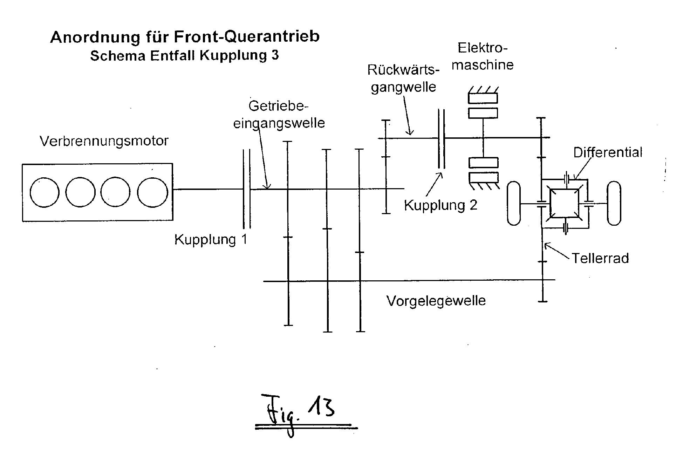

Die Figuren 12 und 13 zeigen vereinfachte Varianten des Ausführungsbeispiels der Figur 2. Beim Ausführungsbeispiel der Figur 12 wurde auf die zweite Kupplung verzichtet. Beim Ausführungsbeispiel der Figur 13 wurde auf die dritte Kupplung verzichtet.

Bei den gezeigten Ausführungsbeispielen kann im Drehmomentpfad zwischen dem Getriebeausgang 7 des Hauptgetriebes (Figur 1) bzw. zwischen der ersten Nebenwelle 28 (Figur 2) und dem Getriebeeingang 31 des Achs- bzw. Verteilergetriebes 9 eine vierte Kupplung angeordnet sein.

## Patentansprüche

1. Hybridfahrzeug (1), mit
- einem Verbrennungsmotor (2),
- einem Hauptgetriebe (6) mit mehreren Übersetzungsstufen, wobei der Verbrennungsmotor (2) über eine erste Kupplung (4) mit einer Getriebeeingangswelle (5) des Hauptgetriebes (6) koppelbar ist,
- einem Achs- oder Verteilergetriebe (9), das einen Getriebeeingang (8) aufweist, der mit einem Getriebeausgang (7) des Hauptgetriebes (6) koppelbar oder permanent gekoppelt ist,
- und einer elektrischen Maschine (18),
**dadurch gekennzeichnet, dass** die elektrische Maschine (18) kinematisch mit der Getriebeeingangswelle (5) des Hauptgetriebes koppelbar ist oder permanent gekoppelt ist und mit dem Getriebeausgang (7) des Hauptgetriebes bzw. mit dem Getriebeeingang (8) des Achs- oder Verteilergetriebes (9) koppelbar ist bzw. permanent gekoppelt ist.

2. Hybridfahrzeug (1) nach Anspruch 1, **dadurch gekennzeichnet, dass** die elektrische Maschine (18) parallel zu dem Hauptgetriebe (6) angeordnet ist, wobei ein Rotor der elektrischen Maschine über eine zweite Kupplung (16) und eine Übersetzungsstufe (14, 15) mit der Getriebeeingangswelle (5) des Hauptgetriebes (6) und über eine dritte Kupplung (19) und eine weitere Übersetzungsstufe (20, 21) mit dem Getriebeausgang (7) des Hauptgetriebes (6) bzw. mit dem Getriebeeingang (8) des Achs- oder Verteilergetriebes (9) gekoppelt ist, wobei der Getriebeausgang (7) des Hauptgetriebes (6) koaxial zum Getriebeeingang (8) des Achs- oder Verteilergetriebes (9) angeordnet ist.

3. Hybridfahrzeug (1) nach Anspruch 2, **dadurch gekennzeichnet, dass** das Hybridfahrzeug (1) ein Fahrzeug mit Heck- oder Allradantrieb ist, wobei der Verbrennungsmotor (2) so eingebaut ist, dass eine Kurbelwelle (3) des Verbrennungsmotors (2) parallel zur Fahrzeuglängsrichtung ist.

4. Hybridfahrzeug (1) nach Anspruch 1, **dadurch gekennzeichnet, dass** das Hybridfahrzeug (1) einen Frontantrieb aufweist, wobei der Verbrennungsmotor (2) so eingebaut ist, dass die Kurbelwelle (3) des Verbrennungsmotors (2) im Wesentlichen quer zu Hauptfahrrichtung des Hybridfahrzeugs (1) ist.

5. Hybridfahrzeug nach einem der Ansprüche 1 oder 4, **dadurch gekennzeichnet, dass** das Hauptgetriebe (6) mehrere Übersetzungsstufen mit jeweils zwei miteinander gekoppelten Rädern (22, 23; 24, 25; 26, 27) aufweist, deren eines Rad (22, 24, 26) auf der Getriebeeingangswelle (5) des Hauptgetriebes (6) und deren anderes Rad (23, 25, 27) jeweils auf einer ersten Nebenwelle (28) des Hauptgetriebes angeordnet ist.

6. Hybridfahrzeug nach einem der Ansprüche 1, 4 oder 5, **dadurch gekennzeichnet, dass** die erste Nebenwelle (28) über eine Übersetzungsstufe (29, 30) mit dem Getriebeeingang (31) des Achs- oder Verteilergetriebes (9) gekoppelt ist.

7. Hybridfahrzeug nach einem der Ansprüche 1, 4 bis 6, **dadurch gekennzeichnet, dass** eine zweite Nebenwelle (36) vorgesehen ist, die über eine Übersetzungsstufe (34, 35) mit der Getriebeeingangswelle (5) des Hauptgetriebes (6) gekoppelt ist.

8. Hybridfahrzeug nach Anspruch 7, **dadurch gekennzeichnet, dass** die zweite Nebenwelle (36) über eine Übersetzungsstufe (30, 37) mit dem Getriebeeingang (31) des Achs- oder Verteilergetriebes (9) gekoppelt ist.

9. Hybridfahrzeug nach einem der Ansprüche 6 bis 8, **dadurch gekennzeichnet, dass** die beiden Nebenwellen (28, 36) jeweils versetzt zur Drehachse des Getriebeeingangs (31) des Achs- oder Verteilergetriebes (9) angeordnet sind.

10. Hybridfahrzeug nach einem der Ansprüche 7 - 9, **dadurch gekennzeichnet, dass** im Drehmomentpfad zwischen der zweiten Nebenwelle (36) und der Getriebeeingangswelle (5) des Hauptgetriebes (6) eine zweite Kupplung (16) angeordnet ist.

11. Hybridfahrzeug nach einem der Ansprüche 7 - 10, **dadurch gekennzeichnet, dass** im Drehmomentpfad zwischen der zweiten Nebenwelle (36) und dem Getriebeeingang (31) des Achs- oder Verteilergetriebes (9) eine dritte Kupplung (19) angeordnet ist.

12. Hybridfahrzeug nach einem der Ansprüche 7 - 11, **dadurch gekennzeichnet, dass** ein Rotor der elektrischen Maschine (18) drehfest mit der zweiten Nebenwelle (36) verbunden ist.

13. Hybridfahrzeug nach einem der Ansprüche 1, bis 12, **dadurch gekennzeichnet, dass** im Drehmomentpfad zwischen dem Getriebeausgang (7) des Hauptgetriebes (6) bzw. zwischen der ersten Nebenwelle (28) und dem Getriebeeingang (31) des Achs- oder Verteilergetriebes (9) eine vierte Kupplung angeordnet ist.
